# EUROPEAN PATENT APPLICATION

(11) **EP 3 647 751 A1**
(43) Date of publication of application: **06.05.2020**
(21) Application number: 18203553.5
(22) Date of filing: 30.10.2018
(51) Int. Cl.: G01L 1/04, B25J 17/00, G01D 5/04, G01L 5/00

(54) **TRANSMISSION FORCE SENSING ELASTIC ACTUATOR**

(71) Applicant: Reboocon Bionics B.V., 2629 HG Delft (NL)
(72) Inventor: Wang, Shiqian, 2624 BJ Delft (NL); Herodotou, Panagiotis, 2645 EZ Delfgauw (NL)
(74) Representative: De Vries & Metman

(57) **Abstract**

The invention relates to a transmission force sensing elastic actuator (1), comprising a proximal link (2) having a housing (3), a distal link (4), a motor (5) having a stator (6) and a rotor (7), a differential transmission (10, 11, 12) having at least first (10), second (11), and third (12) mechanical ports, a planar torsion spring (20) having at least first (20A) and second (20B) mechanical ports, and one or more sensors (25; 26, 27, 28) for establishing the deflection of the planar torsion spring (20), wherein the stator (6) is fixed relative to the proximal link (2), the rotor (7) is drivingly connected to a first port (10) of the transmission, the first port (20A) of the planar torsion spring (20) is fixed to the housing (3) of the proximal link (2), and the second port (20B) of the planar torsion spring (20) is fixed to the second port (11) of the transmission, characterized in that the third port (11) of the transmission is fixed to or part of the distal link (4).

## Description

The invention relates to a transmission force sensing elastic actuator (TFSEA), e.g. for use in a joint of a robotic arm or exoskeleton, comprising a proximal link, also known as ground, having a housing, a distal link, also known as output or load, a motor having a stator and a rotor, and a differential transmission, preferably a differential gear transmission, such as a harmonic drive transmission, having at least first, second, and third mechanical ports. The actuator further has a planar torsion spring, e.g. a spiral spring, having at least first and second mechanical ports, and one or more sensors for establishing the deflection of the planar torsion spring. The stator is fixed relative to the proximal link, typically in the housing, the rotor is drivingly connected to a first port of the transmission, and the rotor preferably rotates around the imaginary central axis of the stator. The first port of the planar torsion spring is fixed to the housing of the proximal link and the second port of the planar torsion spring is fixed to the second port of the transmission.

Lee, C.; Kwak, S.; Kwak, J.; Oh, S. "Generalization of Series Elastic Actuator Configurations and Dynamic Behavior Comparison."; Actuators 2017, 6, 26, describes (e.g. in conjunction with Figure 8b of that publication) a TFSEA configuration, "where a differential gear such as a planetary gear and Harmonic Drive is utilized as the compliant component. The motor torque is transmitted to the load, through the differential gear in this configuration. The spring is attached to the gear housing that is connected to the differential gear, so that the torque transmitting the gear can be measured by the spring. The position sensors can be attached to the motor and spring in this configuration."

US 2007/241696 discloses a mechanical differential actuator comprising a mechanical differential having three mechanical ports. A first transducer with a low impedance is coupled to a first port, a second transducer with a high impedance is coupled to a second port, and the mechanical load is coupled to the third port. "The mechanical differential actuator enables controlling a force and a speed at a load coupled thereto through a known relation between the force and the speed."

US 2011/067517 discloses a rotary actuator assembly for actuation of an upper arm assembly for a dexterous humanoid robot. The upper arm assembly for the humanoid robot includes a plurality of arm support frames each defining an axis. A plurality of rotary actuator assemblies are each mounted to one of the plurality of arm support frames about the respective axes. Each rotary actuator assembly includes a motor mounted about the respective axis, a gear drive rotatably connected to the motor, and a torsion spring. The torsion spring has a spring input that is rotatably connected to an output of the gear drive and a spring output that is connected to an output for the joint.

It is an object of the present invention to provide an improved transmission force sensing elastic actuator, in particular a TFSEA that enables a more compact design and improved wire routing options.

To this end, the third port of the transmission is fixed to or part of the distal link. In an embodiment, the transmission is a harmonic drive comprising a wave generator (the first port of the transmission), a flexible spline (the second port of the transmission), and a circular spline (the third port of the transmission), wherein the rotor is drivingly connected to the wave generator, the second port of the planar torsion spring is fixed to the flexible spline, and the circular spline is fixed to or part of the distal link.

As the second port of the transmission, preferably the flexible spline, is connected to the housing via the planar torsion spring, the flexible spline not only serves as a part of the reduction gear but in addition enables accurately measuring torque. I.e., when the motor drives the wave generator, the torque of the motor is transmitted to the circular spline - and thus to the distal link (output) - and the flexible spline deflects the spring, which enables (indirectly) measuring the output torque, e.g. by measuring the reaction torque and calculating the output torque.

In an embodiment, the flexible spline has a bottom and/or flange, e.g. on one end, and a rim, e.g. on the other end, which rim typically comprises outer gear teeth intermeshing with inner gear teeth of the circular spline.

In a refinement, the rim of the flexible spline is positioned about the wave generator and the bottom and/or flange is located between the planar torsion spring and the motor or the planar torsion spring and the motor are positioned on the same side of the bottom and/or flange of the flexible spline.

In a refinement, the planar torsion spring and the motor are positioned on the same side of the bottom and/or flange of the flexible spline and the flexible spline faces with its bottom and/or flange towards the planar torsion spring and the motor.

In an embodiment, the flexible spline is cup-shaped, having a bottom and a rim, as defined above.

In an embodiment, the planar torsion spring has been calibrated and thus has a known deflection-torque relation.

To provide, on one hand, sufficiently accurate torque sensing resolution and, on the other hand, high bandwidth, required to interact with fast changes in the surroundings, it is preferred that the planar torsion spring has a stiffness in a range from 300 Nm/rad to 3000 Nm/rad, preferably in a range from 500 Nm/rad to 2000 Nm/rad.

In an embodiment, the sensor for establishing the deflection of the planar torsion spring comprises a sensor read head attached to the proximal link and a position-encoding element attached to the second port of the planar torsion spring.

Thus, the sensor measures spring deflection directly, obviating the need for regular calibration and reducing noise compared to differential measurement with two sensors, e.g. using a joint encoder and a motor encoder.

In an embodiment, the actuator comprises a sensor, preferably and encoder, such as a rotary magnetic encoder, for measuring the angle between the distal link and the proximal link.

In another embodiment, the actuator comprises one or more sensors for establishing, preferably measuring, motor current, rotor velocity and/or rotor position relative to the stator.

In another embodiment, the sensor for establishing the deflection of the planar torsion spring is connected to a controller via at least one wire, e.g. two wires, which runs from the sensor read head via the housing to the proximal link directly, i.e. without crossing the transmission or joint.

Within the framework of the present invention a planar torsion spring is a torsion spring extending primarily in a single plane, such as a spiral spring (as opposed to a helical spring). It is preferred that two of the three dimensions exceed the third dimension by at least a factor 5, preferably at least a factor 10, and/or that the planar torsion spring is disc-shaped and/or formed from a disc.

The invention will now be explained in more detail with reference to the Figures, which show a preferred embodiment of the transmission force sensing elastic actuator (TFSEA) according to the present invention.
Figure 1 is a perspective view of a transmission force sensing elastic actuator (TFSEA) according to the present invention.

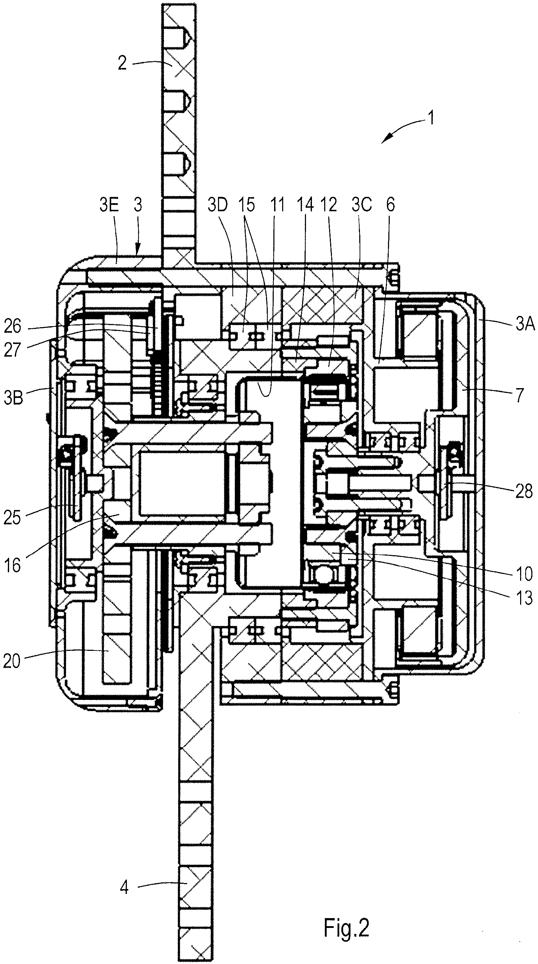

Figure 2 shows a cross-section of the TFSEA shown in Figure 1.
Figures 3, 4, and 6 are exploded views of, respectively, the motor assembly, the distal (output) link assembly, and the proximal (input) link assembly of the TFSEA shown in Figure 1.
Figure 5 is a front view of the planar torque spring of the TFSEA shown in Figure 1.

It is noted that the Figures are schematic in nature and that details, which are not necessary for understanding the present invention, may have been omitted.

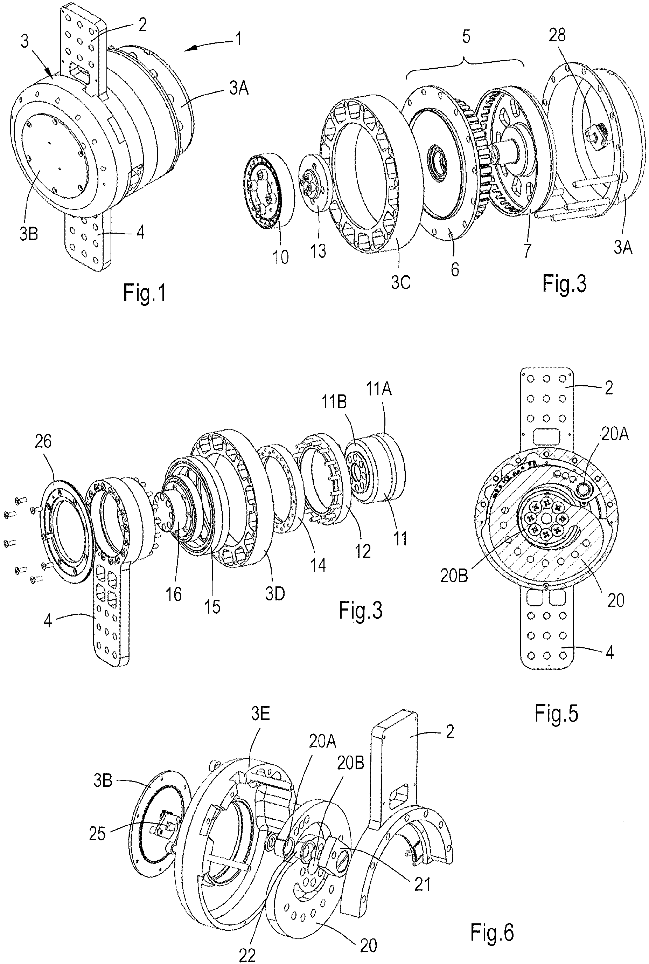

Figure 1 shows a transmission force sensing elastic actuator 1 or TFSEA, e.g. for use in a joint of a robotic arm or exoskeleton. The actuator has a proximal link 2 having a housing 3 composed of a plurality of stacked rings and two end covers 3A, 3B, a distal link 4, and a brushless DC motor 5 having a stator 6, which in this example is secured to one of housing rings, 3C, and a rotor 7. The actuator further has a differential transmission having first, second, and third mechanical ports.

The transmission in this example is a harmonic drive comprising a wave generator 10 (Figure 3), functioning as the first mechanical port, a cup-shaped flexible spline 11 (Figure 4), having a rim 11A provided with outer gear teeth and a bottom wall 11B, the flexible spline functioning as the second mechanical port, and a circular spline 12 provided with inner gear teeth and functioning as the third mechanical port. The rotor 7 is drivingly connected, directly or, as in this example, via an adapter plate 13, to the wave generator 10, which sits tightly inside the rim 11A of the flexible spline 11.

The circular spline is fixed, directly or, as in this example, via an adapter ring 14, to the distal link 4 and is mounted in the housing 3 via a rotary bearing, in this example a double ball bearing 15 mounted in one of housing rings, 3D.

The actuator further has a planar torsion spring, in this example a spiral spring 20, having first and second mechanical ports, which, are formed by the ends 20A, 20B of the planar spring. As shown in Figures 5 and 6, the first end 20A, functioning as the first port of the spring, is fixed to a housing ring 3E, e.g. by means of a shoulder bolt 21 and a bushing 22 to allow rotation of the bolt. The second end 20B, located at the center of the spring and functioning as the second port of the spring, is fixed to the bottom 11B of the flexible spline 11 by a plurality of screws or bolts, directly or, as in this example, via an adapter element 16.

The actuator 1 has a sensor 25 for measuring spring deflection. In this example, the sensor has a high-resolution magnetic encoder with its read head fixed to the inside of the end cover 3B and positioned co-axial with the axis of rotation of the rotor 7 and with its magnet attached to the second end 20B of the spring 20.

The actuator 1 further has a sensor for measuring the angle between the proximal and distal links, 2, 3, having a radial magnet 26 and a read head 27 mounted in the housing, as well as a sensor 28 for measuring the rotation of the rotor 7, having a high-resolution magnetic encoder with its read head fixed to the inside of the end cover 3A and positioned co-axial with the axis of rotation of the rotor 7 and with its magnet attached to the rotor 7.

When the rotor 7 drives the wave generator 10, the torque of the motor is transmitted to the circular spline 12, moving the distal link 4 (output). The flexible spline 11 deflects the spring 20, which enables accurately measuring the output torque. As the read heads of the sensors are all fixed to the housing, the wires connecting the sensors to a controller are stationary (no twisting during rotation of the links) and do not need to cross the transmission or joint. The transmission force sensing elastic actuator (TFSEA) according to the present invention is relatively compact and robust.

The invention is not restricted to the embodiment described above and can be varied in numerous ways within the scope of the claims. E.g., suitable motors include, but are not limited to, brushed DC, induction and AC asynchronous motors. Suitable transmissions include, but are not limited to, cycloidal gear and planetary gear.

## Claims

1. A transmission force sensing elastic actuator (1), comprising
a proximal link (2) having a housing (3),
a distal link (4),
a motor (5) having a stator (6) and a rotor (7),
a differential transmission (10, 11, 12) having at least first (10), second (11), and third (12) mechanical ports,
a planar torsion spring (20) having at least first (20A) and second (20B) mechanical ports, and
one or more sensors (25; 26, 27, 28) for establishing the deflection of the planar torsion spring (20), wherein
the stator (6) is fixed relative to the proximal link (2), the rotor (7) is drivingly connected to a first port (10) of the transmission, the first port (20A) of the planar torsion spring (20) is fixed to the housing (3) of the proximal link (2), and the second port (20B) of the planar torsion spring (20) is fixed to the second port (11) of the transmission, **characterized in that** the third port (11) of the transmission is fixed to or part of the distal link (4).

2. The elastic actuator (1) according to claim 1, wherein the transmission is a harmonic drive (10, 11, 12) comprising a wave generator (10), a flexible spline (11), and a circular spline (11), wherein the rotor (7) is drivingly connected to the wave generator (10), the second port (20B) of the planar torsion spring is fixed to the flexible spline (11), and the circular spline (12) is fixed to or part of the distal link (4).

3. The elastic actuator (1) according to claim 2, wherein the flexible spline (11) has a bottom (11B) and/or flange and a rim (11A).

4. The elastic actuator (1) according to claim 3, wherein the rim (11A) of the flexible spline (11) is positioned about the wave generator (10) and the bottom (11B) and/or flange is located between the planar torsion spring (20) and the motor (5) or the planar torsion spring (20) and the motor (5) are positioned on the same side of the bottom (11B) and/or flange of the flexible spline (11).

5. The elastic actuator (1) according to claim 4, wherein the planar torsion spring (20) and the motor (5) are positioned on the same side of the bottom (11B) and/or flange of the flexible spline (11) and the flexible spline (11) faces with its bottom (11B) and/or flange towards the planar torsion spring (20) and the motor (5).

6. The elastic actuator (1) according to any one of the preceding claims, wherein the planar torsion spring (20) has been calibrated and thus has a known deflection-torque relation.

7. The elastic actuator (1) according to any one of the preceding claims, wherein the planar torsion spring (20) has a stiffness in a range from 300 Nm/rad to 3000 Nm/rad, preferably in a range from 500 Nm/rad to 2000 Nm/rad.

8. The elastic actuator (1) according to any one of the preceding claims, wherein the sensor (25) for establishing the deflection of the planar torsion spring (20) comprises a sensor read head attached to the proximal link (2) and a position-encoding element attached to the second port (20B) of the planar torsion spring (20).

9. The elastic actuator (1) according to any one of the preceding claims, comprising a sensor (26, 27) for measuring the angle between the distal link (4) and the proximal link (2).

10. The elastic actuator (1) according to any one of the preceding claims, comprising one or more sensors (28) for establishing motor current, rotor velocity and/or rotor position relative to the stator.

11. The elastic actuator (1) according to any one of the preceding claims, wherein the sensor (25) for establishing the deflection of the planar torsion spring (20) is connected to a controller via at least one wire, which runs from the sensor (25) via the housing (3) to the proximal link (2).
